(19) Europäisches Patentamt
European Patent Office
Office européen des brevets

(11) **EP 2 075 528 A2**

(12) **EUROPÄISCHE PATENTANMELDUNG**

(43) Veröffentlichungstag:
**01.07.2009 Patentblatt 2009/27**

(51) Int Cl.:
***G01B 13/10*** *(2006.01)*

(21) Anmeldenummer: **08022285.4**

(22) Anmeldetag: **22.12.2008**

(84) Benannte Vertragsstaaten:
**AT BE BG CH CY CZ DE DK EE ES FI FR GB GR
HR HU IE IS IT LI LT LU LV MC MT NL NO PL PT
RO SE SI SK TR**
Benannte Erstreckungsstaaten:
**AL BA MK RS**

(30) Priorität: **24.12.2007 DE 102007062678
15.02.2008 DE 102008009393**

(71) Anmelder: **STOTZ FEINMESSTECHNIK GmbH
D-70839 Gerlingen (DE)**

(72) Erfinder: **Stamenkovic, Milan
70469 Stuttgart (DE)**

(74) Vertreter: **Manitz, Finsterwald & Partner GbR
Postfach 31 02 20
80102 München (DE)**

(54) **Messvorrichtung**

(57)     Eine Messvorrichtung umfasst wenigstens eine Sensoranordnung, die zwei Sensoren umfasst, welche in der Lage sind, einen Abstand zu einer jeweiligen Wand eines Messobjekts in einer jeweiligen Messrichtung zu erfassen, wobei die jeweiligen Messrichtungen der Sensoren auf einer gemeinsamen Messlinie liegen, und eine Auswerteeinheit, die dazu ausgebildet ist, eine auf das Messobjekt bezogene Länge zu ermitteln, die mit der Summe der jeweiligen Abstände in Beziehung steht. Die Sensoranordnung ist mittels eines Aktuators relativ zu dem Messobjekt längs der Messlinie beweglich. Ferner ist eine Steuereinheit vorgesehen, die dazu ausgebildet ist, die Sensoranordnung relativ zu dem Messobjekt aufeinanderfolgend an mehrere Positionen zu bewegen, an jeder der Positionen die zugehörigen Abstände zu messen und daraus einen Längen-Mittelwert zu bestimmen.

FIG. 1

EP 2 075 528 A2

**Beschreibung**

Die vorliegende Erfindung betrifft eine Messvorrichtung mit wenigstens einer Sensoranordnung, die zwei Sensoren umfasst, welche jeweils in der Lage sind, einen Abstand zu einer Wand eines Messobjekts in einer Messrichtung zu erfassen, wobei die jeweiligen Messrichtungen der beiden Sensoren auf einer gemeinsamen Messlinie liegen, und einer Auswerteeinheit, die dazu ausgebildet ist, eine auf das Messobjekt bezogene Länge zu ermitteln, die mit der Summe der jeweiligen Abstände in Beziehung steht.

Es sind beispielsweise pneumatische Messdorne bekannt, die in eine auszumessende Bohrung oder in einen auszumessenden Kanal einführbar sind. An der Spitze eines derartigen Messdorns können sich zwei voneinander weg weisende Luftaustrittsdüsen befinden. Die austretende Luft trifft auf den der jeweiligen Düse gegenüberliegenden Wandabschnitt des Kanals, wodurch die Luftströmung in Abhängigkeit von der Entfernung der Düse zur Wand gehemmt wird. Es kann daher über eine Druck- oder Durchflussmessung der Abstand der jeweiligen Düse von der Kanalwand und daraus der Durchmesser des Kanals bestimmt werden.

Dabei tritt das Problem auf, dass die Lage des Messdorns innerhalb des Kanals im Allgemeinen unbestimmt ist. Solange die beiden Messdüsen exakt gleich sind und die Luftströmung linear vom Wandabstand abhängt, spielt dies keine Rolle, da beide Abstände auf die gemeinsamen Messlinie bezogen sind und sich somit stets zur gleichen Gesamtsumme ergänzen. In der Praxis ist es jedoch schwierig, exakt gleiche Düsen herzustellen. Außerdem besteht nur in einem relativ kleinen Bereich eine lineare Proportionalität zwischen der Luftströmung und dem Wandabstand. Aufgrund von mechanischer Abnutzung kann sich überdies eine bestehende Asymmetrie zwischen den beiden Düsen weiter verschärfen. Daher ergibt sich eine Abhängigkeit des Messergebnisses von der Lage des Messdorns innerhalb des Kanals und somit eine unzureichende Wiederholgenauigkeit der Messvorrichtung.

Es ist eine Aufgabe der Erfindung, die Zuverlässigkeit, Wiederholgenauigkeit und Lebensdauer von Messvorrichtungen der genannten Art zu erhöhen und die aus Variationen in der Sensorpositionierung resultierende Messunsicherheit zu beseitigen.

Diese Aufgabe wird durch eine Messvorrichtung mit den Merkmalen von Anspruch 1 gelöst. Erfindungsgemäß ist die Sensoranordnung mittels eines Aktuators relativ zu dem Messobjekt längs der Messlinie beweglich und es ist eine Steuereinheit vorgesehen, die dazu ausgebildet ist, die Sensoranordnung relativ zu dem Messobjekt aufeinanderfolgend an mehrere Positionen zu bewegen, an jeder der Positionen die zugehörigen Abstände zu messen und daraus einen Längen-Mittelwert zu bestimmen.

Erfindungsgemäß wird also für einen zu ermittelnden Wert nicht nur eine einzige Messung an einer nicht genau bekannten Position auf der Messlinie durchgeführt, sondern mehrere, wobei sich die Relativposition zwischen der Sensoranordnung und dem Messobjekt jeweils ändert. Beispielsweise wird der Messdorn zwischen den Einzelmessungen in einer radialen Richtung innerhalb des auszumessenden Kanals verschoben, so dass sich eine Vielzahl von Einzelmesswerten ergibt, die entsprechend der Düsenasymmetrie und der Nichtlinearitäten voneinander abweichen. Aus der Vielzahl von Einzelmesswerten wird dann ein Längen-Mittelwert gebildet, der dem Endergebnis entspricht. Der Vorteil dieses Prinzips besteht darin, dass sich Abweichungen der Einzelmesswerte aufgrund von unterschiedlichen Messpositionen im Endergebnis herausmitteln. Asymmetrien zwischen zwei einer Messlinie zugeordneten Sensoren sowie Nichtlinearitäten im Zusammenhang zwischen Wandabstand und Messwert spielen daher keine Rolle mehr, sodass sich insgesamt eine wesentlich größere Robustheit und Wiederholgenauigkeit der Messung ergibt. Im Falle einer fortschreitenden mechanischen Abnutzung des Messdorns mit einhergehender Verstärkung der Sensorasymmetrie ergibt sich ferner bei vorgegebener Wiederholgenauigkeit eine höhere Lebensdauer als bei herkömmlichen Messvorrichtungen.

Mögliche Weiterbildungen der Erfindung sind in den abhängigen Ansprüchen, der Beschreibung sowie der Zeichnung angegeben.

Gemäß einer Ausführungsform ist der Längen-Mittelwert das arithmetische Mittel der sich aus den gemessenen Abständen ergebenden Längen. Das arithmetische Mittel ist rechnerisch leicht zu ermitteln und gibt die durchschnittliche Länge bezogen auf sämtliche Einzelmessungen an. Da jeder Einzelmessung eine unterschiedliche Sensorposition zugrunde liegt, werden durch die Mittelung Einzelfehler herausgerechnet.

Das arithmetische Mittel kann gewichtet sein, um eine ungleichmäßige Verteilung der Sensorpositionen zu berücksichtigen. Auf diese Weise kann vermieden werden, dass häufig angesteuerte Positionen überbewertet werden.

Gemäß einer alternativen Ausführungsform ist der Längen-Mittelwert der Median der sich aus den gemessenen Abständen ergebenden Längen. Der Median hat den Vorteil, dass er besonders robust gegenüber Ausreißern, also extrem abweichenden Einzelwerten, ist.

Gemäß einer weiteren Ausführungsform ist der Längen-Mittelwert das arithmetische Mittel zwischen der höchsten bestimmten Länge und der niedrigsten bestimmten Länge. Dadurch reduziert sich der Rechenaufwand auf ein Minimum.

Die Auswerteeinheit kann dazu ausgebildet sein, die auf das Messobjekt bezogene Länge mittels einer Kalibrierfunktion aus jeweiligen Eingangsgrößen zu ermitteln. Beispielsweise gibt die Kalibrierfunktion den Durchmesser eines auszumessenden Kanals in Abhängigkeit eines gemessenen Druckwerts an. Es können auch vielfältige weitere Eingangsgrößen berücksichtigt werden, wie z.B. der Versorgungsluftdruck, die Umgebungstemperatur, die Temperatur des Messobjekts, die Temperatur der Messluft, die Luftfeuchtigkeit sowie die Oberflächengüte und die Temperatur eines zum Kalibrieren verwendeten Einstellnormals.

Die Auswerteeinheit kann ferner dazu ausgebildet sein, mittels einer allgemeinen Linearisierungsfunktion aus dem Längen-Mittelwert eine linearisierte Endgröße zu bilden. Dadurch kann eine Erweiterung des Messbereiches erzielt werden, da die Streuung der Kalibrierfunktion wesentlich größer ist als die Streuung der ermittelten physikalischen Größe.

Die allgemeine Linearisierungsfunktion kann ein Polynom von vorgegebener Ordnung sein. Dies hat insbesondere den Vorteil, dass die Ordnung gemäß der geforderten Genauigkeit gewählt werden kann. Alternativ kann die allgemeine Linearisierungsfunktion auch eine abschnittsweise lineare Interpolationsfunktion sein.

Gemäß einer Ausgestaltung der Erfindung ist die Sensoranordnung relativ zu dem Messobjekt zwischen zwei Extremlagen beweglich, welche einer Berührung zwischen einem der Sensoren und einer jeweiligen Wand des Messobjekts entsprechen. Dadurch ist sichergestellt, dass der gesamte Bereich möglicher Sensorpositionierungen abgedeckt ist.

Es kann auch eine Detektionseinrichtung zum Erfassen einer Berührung zwischen einem der Sensoren und einer jeweiligen Wand des Messobjekts vorgesehen sein. Die Extremlagen sind dann exakt definiert. Außerdem kann die Steuereinheit dazu ausgebildet sein, bei einem Erfassen einer Berührung zwischen einem der Sensoren und einer jeweiligen Wand des Messobjekts durch die Detektionseinrichtung die Bewegung der Sensoranordnung relativ zu dem Messobjekt in Richtung der Wand zu stoppen. Dadurch kann eine Beschädigung der Sensoranordnung, also beispielsweise eine übermäßige Messdornverbiegung, verhindert werden.

Die Steuereinheit kann auch dazu ausgebildet sein, die Sensoranordnung relativ zu dem Messobjekt automatisch an eine Vielzahl von vorbestimmten Positionen zu bewegen. Die Anzahl und die Verteilung der Positionen können in Abhängigkeit von den jeweiligen Anwendungsvorgaben ausgewählt sein. Beispielsweise kann die Sensoranordnung zwischen den oben genannten Extremlagen hin- und herbewegt werden, wobei an wenigstens zwanzig, vorzugsweise wenigstens hundert, Positionen eine Messung durchgeführt wird. Durch die automatische Positionsansteuerung ist die Verteilung der Einzelpositionen bekannt und kann in der Auswertung berücksichtigt werden.

Vorzugsweise ist die Sensoranordnung in einer quer zu der Messlinie ausgerichteten Z-Richtung relativ zu dem Messobjekt beweglich. Dadurch ist es beispielsweise möglich, einen Kanal entlang seiner Tiefe auszumessen, also ein Tiefenprofil seines Durchmessers zu erstellen. Zu diesem Zweck kann die Steuereinheit insbesondere dazu ausgebildet sein, das Messobjekt längs der Z-Richtung abzutasten, also einen Scan durchzuführen.

Die Steuereinheit kann weiterhin dazu ausgebildet sein, zum Abtasten des Messobjekts die Sensoranordnung unter einer kontinuierlichen Oszillationsbewegung längs der Messlinie relativ zu dem Messobjekt längs der Z-Richtung zu bewegen. Insbesondere kann eine relativ schnelle Oszillationsbewegung längs der Messlinie einer relativ langsamen Abtastbewegung in Z-Richtung überlagert sein. Es ist dann keine aufwändige gezielte Ansteuerung einzelner Positionen längs der Messlinie nötig, da es lediglich darauf ankommt, den Bereich möglicher radialer Positionen in einer bestimmten Z-Position vollständig zu überstreichen.

Gemäß einer Weiterbildung der Erfindung sind wenigstens zwei unterschiedliche Messlinien vorgesehen. Für jede Messlinie kann eine eigene Messanordnung vorgesehen sein. Die Messlinien können sich beispielsweise rechtwinklig schneiden. Der Bereich möglicher Sensorpositionierungen erstreckt sich dann in einer XY-Ebene über das zugängliche Messgebiet. Es werden in diesem Fall positionsbedingte Messabweichungen in beliebiger Richtung berücksichtigt.

Die Messrichtungen der Sensoren können gemäß einer Ausführungsform der Erfindung aufeinander zu weisen. Mit einer derartigen Anordnung kann eine Außenmessung durchgeführt werden. Anstatt eines Kanals oder einer Bohrung kann also beispielsweise ein zylindrisches Objekt von außen vermessen werden. Die einzelnen Sensoren können auch beispielsweise ringförmig angeordnet und auf ein gemeinsames Zentrum hin ausgerichtet sein.

Der Aktuator kann durch eine Vielzahl von Techniken realisiert werden. Beispielsweise kann der Aktuator wenigstens einen Elektromagneten, wenigstens ein Element aus einem feldaktiven Material, insbesondere aus einem elektrostriktiven oder magnetostriktiven Material, wenigstens einen mechanisch, pneumatisch oder elektrisch betriebenen Vibrator, oder wenigstens ein Piezoelement umfassen. Zum Hin- und Herbewegen eines metallischen Messdorns können zum Beispiel zwei gegenüberliegende Elektromagnete eingesetzt werden, welche direkt auf den Messdorn wirken. Der Messdorn kann alternativ an einem XY-Aktuator befestigt sein. Auf dem Messdorn können auch einzelne Piezostreifen oder eine flächige Piezobeschichtung vorgesehen sein, die bei Anlegen einer elektrischen Spannung ihre Dicke ändern und den Messdorn gegenüber einem Abstützelement verschieben. In der Ausgangsstellung sind die Piezostreifen kontrahiert.

Der Aktuator kann auch ein XYZ-Aktuator zum Bewegen der Sensoranordnung relativ zu dem Messobjekt in drei Raumrichtungen sein. Dies hat den Vorteil, dass sowohl die vorzusehende Positionsverstellung längs der Messlinie als auch ein Scan in Z-Richtung durch eine einheitlich anzusteuernde Komponente bewerkstelligt werden kann.

Bei der erfindungsgemäßen Bewegung der Sensoranordnung mittels des Aktuators kommt es lediglich darauf an, die Relativposition zwischen der Sensoranordnung und dem Messobjekt zu verändern. Der Aktuator muss also nicht an der Sensoranordnung angebracht sein, sondern er kann auch mit dem Messobjekt in Eingriff stehen, um dieses relativ zu der Sensoranordnung zu bewegen. In bestimmten Anwendungsfällen ist es nämlich günstiger, die Sensoranordnung fixiert zu lassen und lediglich das Messobjekt zu verschieben.

Gemäß einer Ausführungsform sind die Sensoren pneumatische Längenmesseinrichtungen, welche insbesondere eine gemeinsame Luftversorgung aufweisen. Derartige pneumatische Messvorrichtungen dienen beispielsweise zum hochgenauen Vermessen von kleinen Bohrungen. Wie vorstehend beschrieben kann die Messvorrichtung beispielsweise einen dünnen Messdorn mit einem Paar von Messdüsen an einem Ende desselben umfassen. Die Messvorrichtung kann auch zwei über Kreuz angeordnete Paare von Messdüsen oder eine Ringdüse aufweisen. Eine Ringdüse entspricht gewissermaßen einer unendlichen Anzahl von aneinandergereihten Einzelsensoren.

Gemäß einer alternativen Ausführungsform sind die Sensoren taktile Abstandssensoren, insbesondere Induktivtaster. Auch für derartige Messvorrichtungen sind die Prinzipien der Erfindung in vorteilhafter Weise anwendbar.

Die Sensoranordnung kann an einem Endbereich eines insbesondere flexiblen Messdorns angebracht sein. Bei einem flexiblen Messdorn führt insbesondere eine leichte Berührung der Wand des Messobjekts nicht zu einer Beschädigung.

Der Aktuator kann gemäß einer Ausführungsform elektrostriktive Elemente umfassen, welche den Messdorn in Umfangsrichtung vollständig umgeben. Die elektrostriktiven Elemente können durch ein externes Feld beeinflusst werden, um so eine Verschiebung des Messdorns herbeizuführen.

Die Sensoranordnung ist gemäß einer Ausführungsform schwimmend in der Messvorrichtung gehalten. Es werden dann lediglich zwei Elektromagnete und eine Steuerelektronik benötigt, um den Messdorn entlang der Messlinie zu verschieben.

Die Erfindung wird im Folgenden beispielhaft anhand der Zeichnungen beschrieben.

Fig. 1     zeigt zwei verschiedene Schnittansichten einer erfindungsge- mäßen Messvorrichtung.

Fig. 2     zeigt eine Schnittansicht einer Messvorrichtung mit einem Aktuator gemäß einer ersten Ausführungsform der Erfindung.

Fig. 3     zeigt eine Schnittansicht einer Messvorrichtung mit einem Aktuator gemäß einer zweiten Ausführungsform der Erfin- dung.

Fig. 4     zeigt eine Schnittansicht einer Messvorrichtung mit einem Aktuator gemäß einer dritten Ausführungsform der Erfindung.

Fig. 5     zeigt eine Schnittansicht einer Messvorrichtung mit einem Aktuator gemäß einer vierten Ausführungsform der Erfin- dung.

Fig. 6     zeigt eine Schnittansicht einer Messvorrichtung mit einem Aktuator gemäß einer fünften Ausführungsform der Erfin- dung.

Fig. 7     zeigt eine Schnittansicht einer Messvorrichtung mit einem Aktuator gemäß einer sechsten Ausführungsform der Erfin- dung.

Fig. 8     zeigt eine Schnittansicht einer Messvorrichtung gemäß einer siebten Ausführungsform der Erfindung.

Fig. 9     zeigt eine Schnittansicht einer Messvorrichtung mit einem Aktuator gemäß einer achten Ausführungsform der Erfin- dung.

Fig. 10    zeigt eine Schnittansicht einer Messvorrichtung mit einem Aktuator gemäß einer neunten Ausführungsform der Erfin- dung.

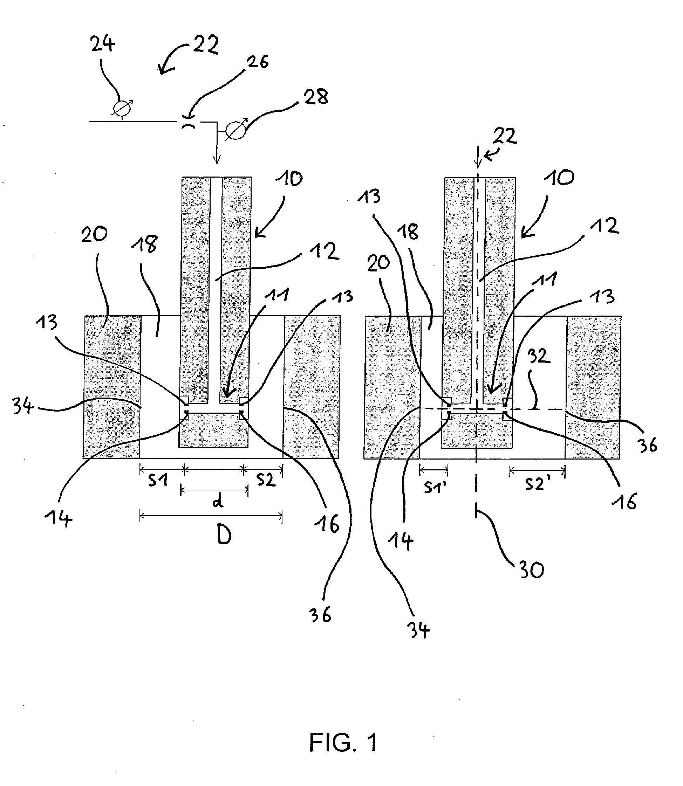

In Fig. 1 ist ein pneumatischer Messdorn 10 dargestellt, der einen zentralen Luftzufuhrkanal 12 und zwei Messdüsen 14, 16 umfasst. Die Messdüsen 14, 16 bilden bei einer Vorrichtung der dargestellten Art eine Sensoranordnung 11 mit zwei Sensoren 13. Der Messdorn 10 befindet sich innerhalb eines auszumessenden Kanals 18, welcher in einem Messobjekt 20 ausgebildet ist. Über den Luftzufuhrkanal 12 sind die beiden Messdüsen 14, 16 an eine gemeinsame Luftversorgung 22 angeschlossen. Die Luftversorgung 22 weist eine erste Druckmessvorrichtung 24, eine stromabwärts davon angeordnete Messvordüse 26 und eine wiederum stromabwärts angeordnete zweite Druckmessvorrichtung 28 auf und wird durch eine nicht dargestellte externe Druckluftquelle gespeist. Bei einer Beaufschlagung des Luftzufuhrkanals 12 mit Druckluft tritt diese aus den Messdüsen 14, 16 aus und prallt gegen die jeweils gegenüberliegende Wand 34, 36 des Kanals 18. Der Luftdurchfluss durch die jeweilige Messdüse 14, 16 hängt von deren Abstand zur Wand 34, 36 ab. Bei konstantem Versorgungsdruck P1, gemessen durch die erste Druckmessvorrichtung 24, ist der Messdruck P2, gemessen durch die zweite Druckmessvorrichtung 28, umso geringer, je größer der Durchmesser D des auszumessenden Kanals 18 relativ zu dem Durchmesser d des Messdorns 10 ist.

Somit kann also über eine Messung des Druckabfalls über die Messvordüse 26 der Durchmesser D des Kanals 18 bestimmt werden.

Die Messdüsen 14, 16 sind jeweils in Bezug auf die Längsachse 30 des Messdorns 10 radial nach außen gerichtet und definieren so eine gemeinsame Messlinie 32. Pneumatische Messeinrichtungen der hier dargestellten Art sind beispielsweise in der US 6,435,006 B1 beschrieben, deren Offenbarung hiermit in die vorliegende Anmeldung einbezogen wird.

Im linken Teil von Fig. 1 ist der Messdorn 10 exakt mittig in den auszumessenden Kanal 18 eingeführt, sodass der Abstand S 1 zwischen der Messdüse 14 und der Wand 34 gleich dem Abstand S2 zwischen der Messdüse 16 und der Wand 36 ist. Im rechten Teil von Fig. 1 ist eine Situation dargestellt, bei welcher der Messdorn 10 nicht mittig in dem Kanal 18 positioniert ist. Bei einem derartig azentrisch positionierten Messdorn 10 unterscheidet sich der Abstand S1' zwischen der Messdüse 14 und der Wand 34 von dem Abstand S2' zwischen der Messdüse 16 und der Wand 36. Die Summe der auf die beiden Messdüsen 14, 16 bezogenen Abstände ist jedoch stets gleich:

$$S1 + S2 = S1' + S2' = \text{const.} \qquad (1)$$

Sofern die Messdüsen 14, 16 exakt gleich bearbeitet sind und ein linearer Zusammenhang zwischen der aus einer jeweiligen Messdüse 14, 16 austretenden Luftströmung und der Entfernung dieser Messdüse 14, 16 von der gegenüberliegenden Wand 34, 36 besteht, gilt somit:

$$P2 = P2' \qquad (2)$$

Das heißt, solange sich der Messdorn nur in einer radialen Richtung, also längs der Messlinie 32 bewegt, gilt für eine beliebige Position "k" innerhalb des Kanals 18:

$$S1_k + S2_k = \text{const.} \qquad (3)$$

und

$$P2_k = \text{const.} \qquad (4)$$

Zur endgültigen Berechnung des gesuchten Durchmessers D des Kanals 18 muss noch von dem gemessenen Druckwert oder einem von der zugehörigen Druckmessvorrichtung 28 ausgegebenen Spannungswert auf die Abstandssumme umgerechnet werden. Dies geschieht in an sich bekannter Weise, beispielsweise mittels einer Kalibrierfunktion f:

$$D = f(x1, x2, \ldots, xj) \qquad (5)$$

wobei x1, x2, ..., xj die relevanten Eingangsgrößen darstellen.

Wenn der Eingangsdruck P1 konstant und alle weiteren bedeutsamen Umgebungsbedingungen stabil sind, reicht für die Kalibrierung eine einzige Eingangsgröße aus. Es gilt dann also beispielsweise f=f(P2). Ist der Versorgungsdruck P1 Schwankungen unterworfen, müssen diese mitberücksichtigt werden. Die Kalibrierfunktion lautet in diesem Fall f=f(P1,P2). Je nach Anwendungsfall können verschiedene weitere Einflussgrößen berücksichtigt werden, wie auch im einleitenden Teil bereits erwähnt ist.

Da in der Praxis die Messdüsen 14, 16 aufgrund von Fertigungstoleranzen und mechanischer Abnutzung nie exakt gleich sind und die Luftströmung ferner nur in einem sehr kleinen Bereich proportional zu dem Abstand $S1_k$, $S2_k$ zwischen der jeweiligen Messdüse 14, 16 und der zugehörigen Wand 34, 36 ist, wird je nach radialer Position des in den Kanal 18 eingeführten Messdorns 10 ein unterschiedlicher Messdruck P2 gemessen:

$$P2_k \neq const. \quad (k=1, 2, \dots n) \tag{6}$$

wobei n die Anzahl der Messungen ist. Folglich wird auch je nach Messdornposition ein unterschiedlicher Durchmesser D bestimmt.

Unter der Annahme, dass sich der Messdorn 10 lediglich entlang der Messlinie 32 bewegt, gilt für die Kalibrierfunktion:

$$f_k(x_1,\dots,x_j) \neq const. \tag{7}$$

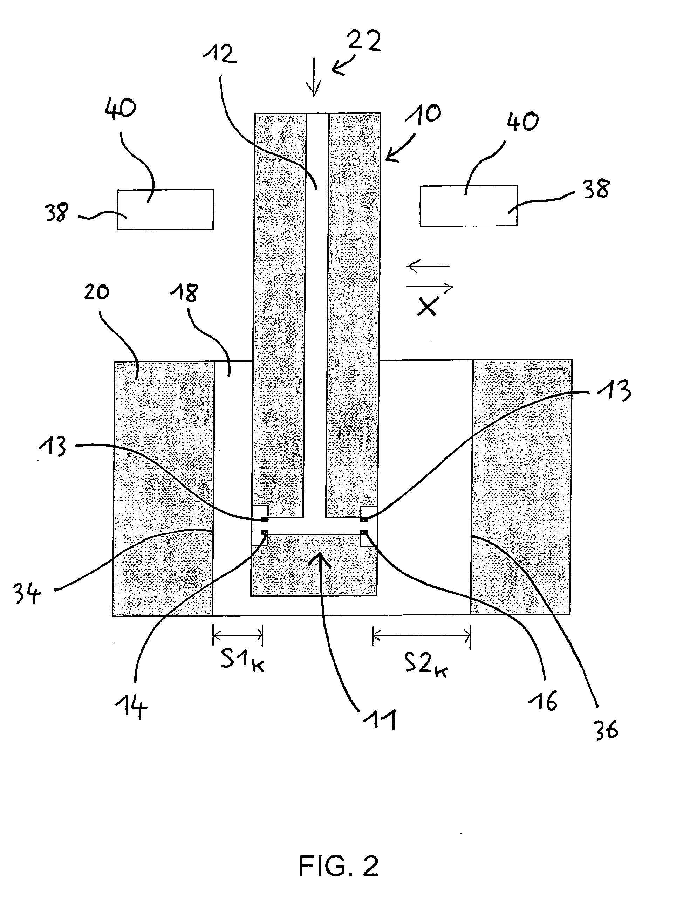

Diese Messunsicherheit wird durch eine Vielfachmessung an jeweils unterschiedlichen radialen Positionen mit anschließender Mittelwertbildung kompensiert. Zu diesem Zweck ist die Messvorrichtung gemäß den Fig. 2 bis 10 mit einem Aktuator 38 ausgestattet, der in der Lage ist, eine relative Bewegung zwischen dem Messdorn 10 und dem Messobjekt 20 herbeizuführen. Mittels dieses Aktuators 38 werden mit dem Messdorn 10 mehrere radiale Positionen in dem auszumessenden Kanal 18 angefahren, wobei an jeder der angefahrenen Positionen die auszuwertenden Eingangsgrößen erfasst werden. Zur Bestimmung des Durchmessers D wird dann die folgende Kalibrierformel verwendet:

$$D = G \frac{1}{n} \sum_{k=1}^{n} f_k(x_1,\dots,x_j) + Y \tag{8}$$

G bezeichnet hier einen Gain-Faktor und Y einen Offset. Sowohl G als auch Y sind lineare Koeffizienten, die anhand von Einstellnormalen ermittelt sind. Sind die relevanten Einflussgrößen auf den Versorgungsluftdruck P1 und den Messdruck P2 begrenzt, ergibt sich:

$$D = G \frac{1}{n} \sum_{k=1}^{n} (A_1 P_1^2 + A_2 P_1 P_2 + A_3 P_1 + A_4 P_2 + A_5)_k + Y \tag{9}$$

wobei $A_1$, $A_2$, $A_3$, $A_4$ und $A_5$ Konstanten sind.

Besitzt der Messdorn 10 zwei über Kreuz angeordnete Düsenpaare, kann die Formel (8) erweitert werden zu:

$$D = G \frac{1}{nq} \sum_{i=1}^{q} \sum_{k=1}^{n} f_{ki}(x_1,...,x_j) + Y \qquad (10)$$

Anstelle der Doppelsumme kann auch eine einfache Summe gebildet werden, indem die Messungen in Y-Richtung anschließend an die Messungen in X-Richtung aufsummiert werden.

Die Formeln (8), (9) und (10) liefern unter der Voraussetzung verlässliche Durchschnittswerte, dass die Positionen 1...k gleichmäßig über den Bereich möglicher Positionen verteilt sind. Ist diese Voraussetzung nicht gegeben, kann es zu einer unerwünschten Übergewichtung bestimmter Positionen kommen. Eine derartige Verfälschung der Messergebnisse kann mittels Gewichtsfaktoren $R_k$, $R_{ki}$ korrigiert werden, sofern die Verteilung der Positionen bekannt ist:

$$D = G \frac{1}{n} \sum_{k=1}^{n} R_k f_k(x_1,...,x_j) + Y \qquad (11)$$

$$D = G \frac{1}{nq} \sum_{i=1}^{q} \sum_{k=1}^{n} R_{ki} f_{ki}(x_1,...,x_j) + Y \qquad (12)$$

$$D = G \frac{1}{n} \sum_{k=1}^{n} R_k (A_1 P_1^2 + A_2 P_1 P_2 + A_3 P_1 + A_4 P_2 + A_5)_k + Y \qquad (13)$$

Wenn die Koeffizienten $R_k$, $R_{ki}$ unbekannt sind, kann alternativ auch der Median oder der Ausdruck (MAX+MIN)/2, also das arithmetische Mittel zwischen dem höchsten Messwert und dem niedrigsten Messwert, gebildet werden. Die Kalibrierformel lautet dann wahlweise:

$$D = G \, median \left[ f_k(x_1,...,x_j) \right] + Y \quad k=1...n \qquad (14)$$

$$D = G \left( max \left[ f_k(x_1,...,x_j) \right] + min \left[ f_k(x_1,...,x_j) \right] \right) + Y \quad k=1...n \qquad (15)$$

$$D = G\left(median\left[f_k(x_1,...,x_j)\right] + max\left[f_k(x_1,...,x_j)\right] + min\left[f_k(x_1,...,x_j)\right]\right) + Y \quad k=1...n \quad (16)$$

Die Streuung der Kalibrierfunktion $f(x_1...,x_j)$ ist wesentlich größer als die Streuung der ermittelten physikalischen Größe D. Wird nun D als unabhängige Variable betrachtet, kann eine Erweiterung des Messbereiches erzielt werden, das heißt, die neu berechnete Endgröße, also der Durchmesser oder der Abstand, wird als L bezeichnet:

$$L = g(D) \quad (17)$$

wobei g(D)=g(x) eine allgemeine Linearisierungsfunktion ist. Als gut geeignet haben sich Polynome m-ter Ordnung oder eine m-Segment-Linearinterpolation erwiesen:

$$g(x) = C_0 + C_1 x + C_2 x^2 + ... + C_m x^m \quad (18)$$

$$g(x) = x\, K_i + B_i \quad \text{für } i=1...m \quad X_i \leq x < X_{i+1} \quad (19)$$

Daraus ergibt sich:

$$L = C_0 + C_1 D + C_2 D^2 + ... + C_m D^m \quad (20)$$

oder

$$L = D\, K_i + B_i \quad \text{für } i=1...m \quad D_i \leq D < D_{i+1} \quad (21)$$

wobei $B_i$, $C_i$ und $K_i$ Konstanten sind, die wiederum anhand von Einstellnormalen bestimmbar sind.

Die relative Bewegung zwischen der Sensoranordnung 10 und dem Messobjekt 20 kann auf vielfältige verschiedene Arten bewerkstelligt werden, wie im folgenden unter Bezugnahme auf die Figuren 2 bis 10 beschrieben wird. Die Verschiebungsrichtungen sind jeweils durch Pfeile symbolisiert.

Gemäß der in Fig. 2 dargestellten Ausführungsform ist der Messdorn 10 schwimmend gehalten und wird mittels eines Aktuators 38 in Form zweier Elektromagnete 40 hin und her bewegt. Durch Vorsehen von weiteren Paaren von Elektromagneten könnte auch eine Bewegung des Messdorns 10 in mehreren Richtungen ermöglicht werden.

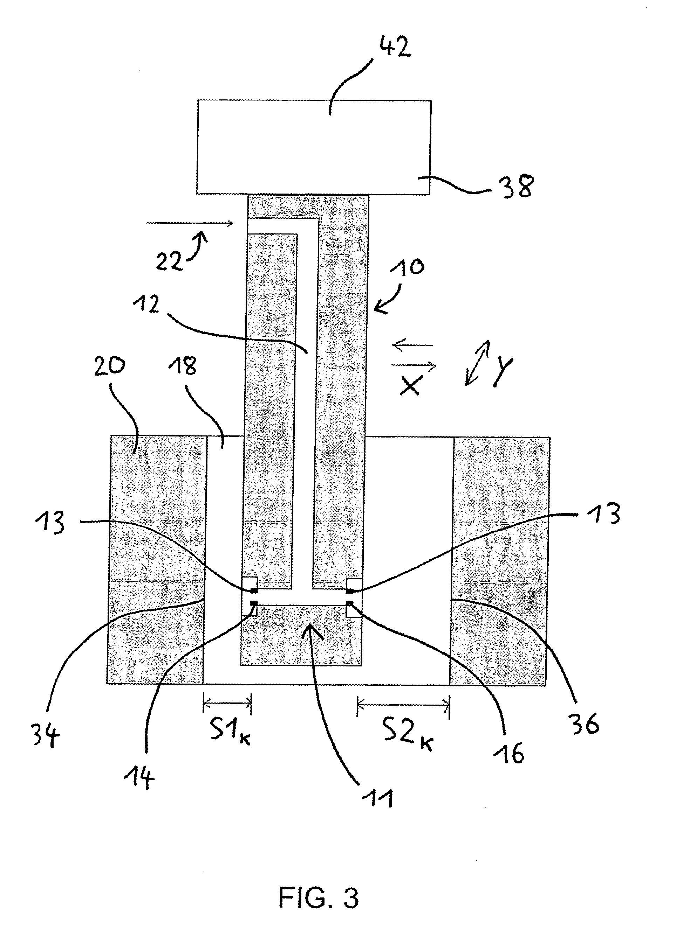

Gemäß Fig. 3 kann der Messdorn 10 auch an einem integrierten XY-Aktuator 42 befestigt sein, der eine zweidimensionale Bewegung ermöglicht.

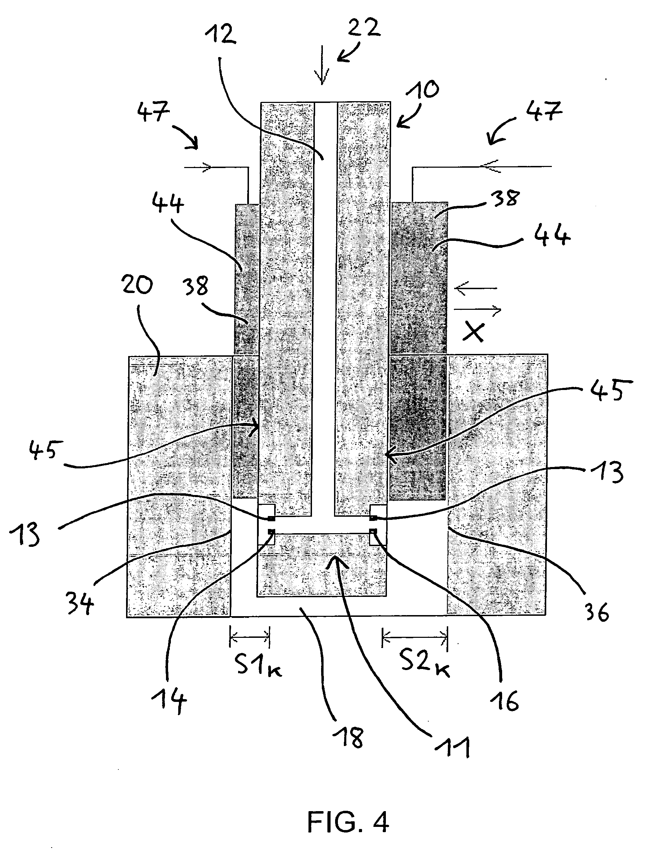

Bei der in Fig. 4 dargestellten Ausführungsform sind synchron angesteuerte elektrostriktive Leisten 44 an der Außenseite 45 des Messdorns angebracht, sodass sie sich in dem freien Raum zwischen dem Messdorn 10 und der Kanalwand befinden und sich an der Kanalwand abstützen können. Durch Anlegen einer Steuerspannung 47 können die Leisten 44 kontrahiert oder expandiert werden, wodurch der Messdorn 10 wie dargestellt in radialer Richtung bewegt wird. Anstatt einzelner Leisten 44 kann auch eine weitgehend vollflächige elektrostriktive Beschichtung auf der Außenseite 45 des Messdorns 10 aufgebracht sein.

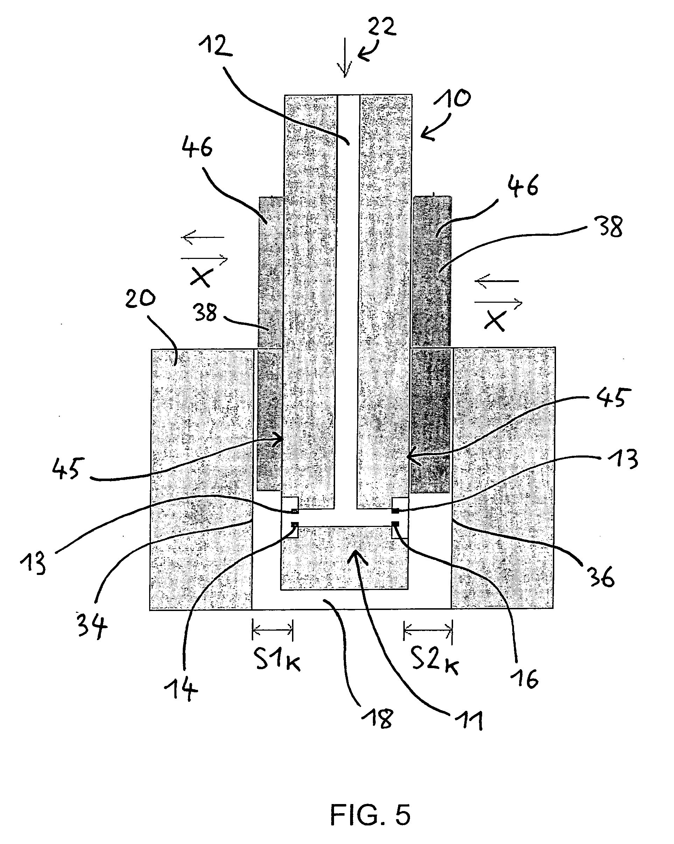

Fig. 5 zeigt eine Ausführungsform, bei welcher Elemente aus einem durch ein äußeres Feld beeinflussbaren Material verwendet werden. Insbesondere können magnetostriktive Elemente 46 zur Anwendung kommen, welche durch ein von außen einwirkendes Magnetfeld kontrahiert oder expandiert werden können.

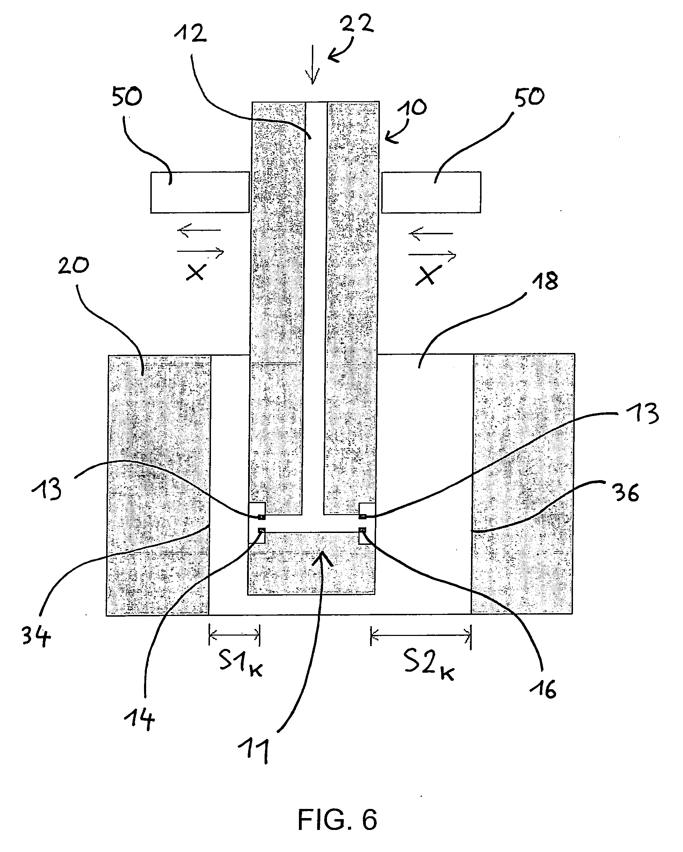

Gemäß Fig. 6 kann ein beliebiges Kraftübertragungsmittel 50, wie beispielsweise Luft oder Öl, verwendet werden, um den Messdorn 10 in Bewegung zu setzen.

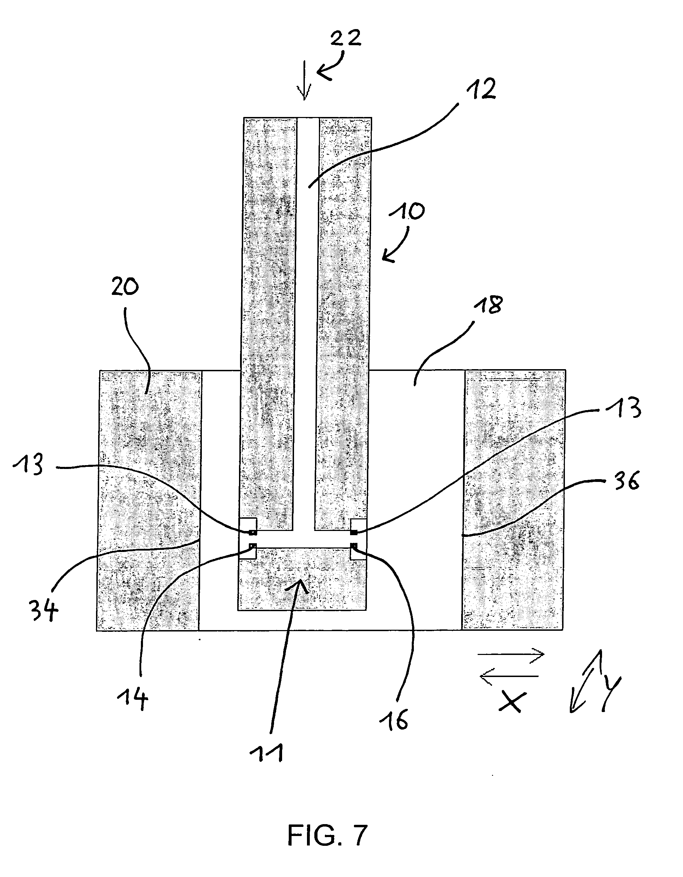

Gemäß Fig. 7 kann anstelle des Messdorns 10 auch das Messobjekt 20 bewegt werden, falls dies in einem bestimmten Anwendungsfall günstiger ist. Erfindungsgemäß kommt es lediglich auf die Relativbewegung zwischen dem Messdorn 10 und dem Messobjekt 20 an.

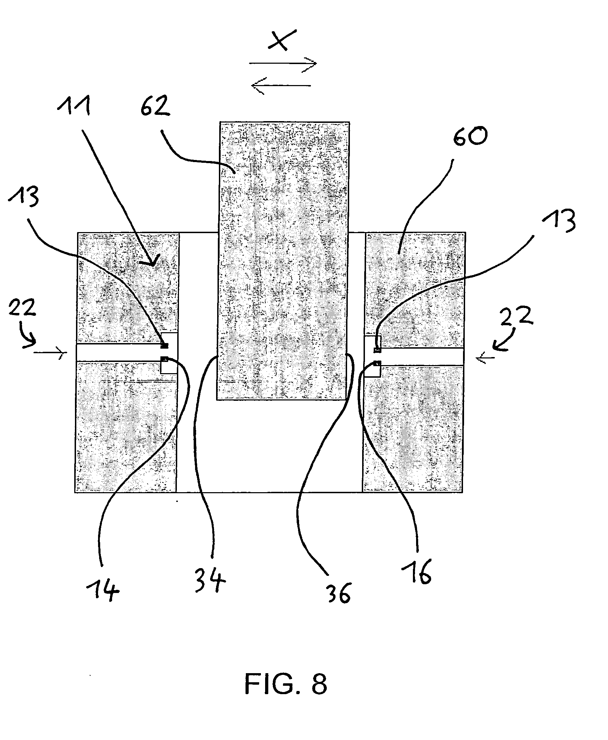

Fig. 8 zeigt eine alternative Ausführungsform der Erfindung, bei welcher die Sensoranordnung 11 zur Durchführung von Außenmessungen in einen Messring 60 integriert ist. Die Messdüsen 14, 16 sind in Bezug auf den Messring 60 nach innen gerichtet und ermöglichen so die Vermessung der Außenmaße eines zylindrischen Messobjekts 62. Auch bei dieser Ausführungsform kann entweder die Sensoranordnung 11 oder das Messobjekt 62 verschoben werden.

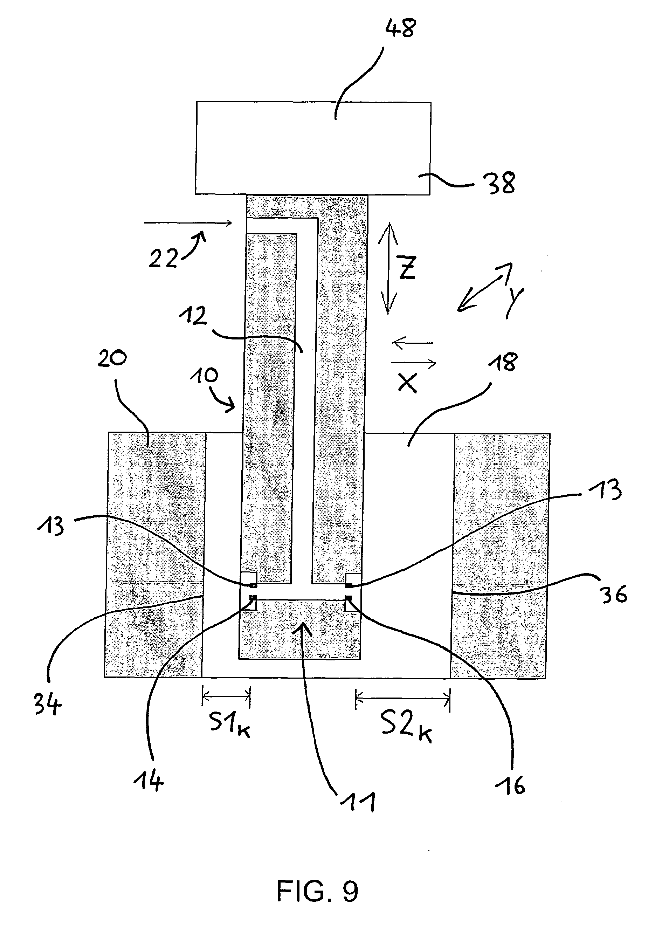

Gemäß Fig. 9 ist der Messdorn 10 an einem XYZ-Aktuator 48 befestigt, sodass eine Bewegung in drei Raumrichtungen möglich ist. Der Messdorn kann dann entlang der Tiefe des Kanals 18 bewegt werden, also ein Tiefenprofil des Durchmessers D des Kanals 18 aufnehmen. Ein derartiges Abtasten oder Scanning kann derart durchgeführt werden, dass der Messdorn 10 in jeder gewünschten Tiefe in X- und/oder Y-Richtung oszilliert wird und so für jede Tiefe eine entsprechende Menge an Messwerten aufgenommen wird, aus der dann ein Mittelwert gebildet wird. Erfolgt die Scanbewegung verhältnismäßig langsam, kann sie auch kontinuierlich durchgeführt werden, wobei eine relativ schnelle Oszillationsbewegung in X- und Y-Richtung überlagert ist.

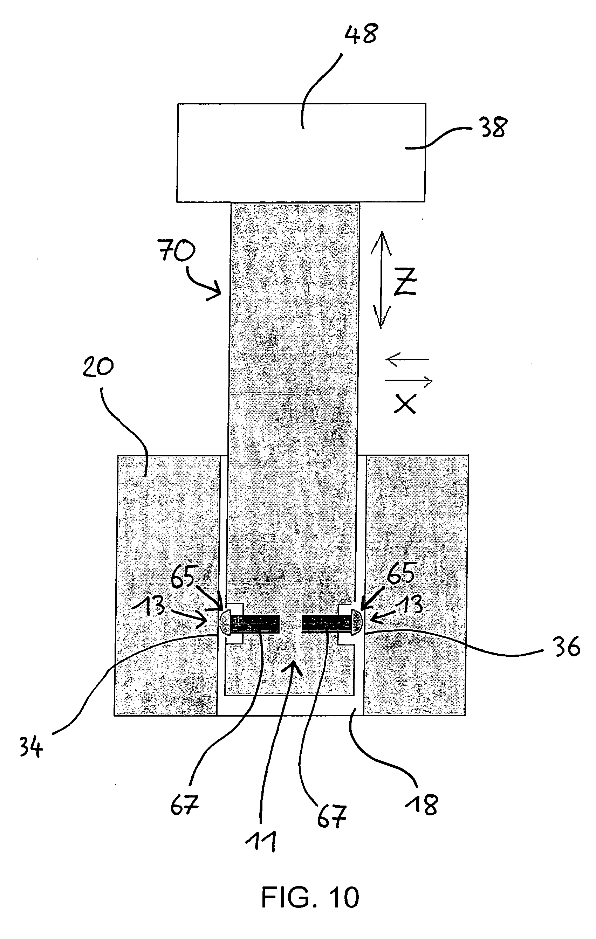

Die Prinzipien der Erfindung sind auch auf andere Arten von Sensoranordnungen 11 übertragbar. In Fig. 10 ist beispielhaft ein Messdorn 70 dargestellt, an dem zwei Induktivtaster 65, so genannte LVDTs, vorgesehen sind. Diese weisen einen Ferritkern 67 auf und berühren die jeweilige Wand 34, 36 des auszumessenden Kanals 18. Auch bei diesem Ausführungsbeispiel können zwei oder mehr Paare von Sensoren 13 über den Umfang des Messdorns 70 verteilt angeordnet sein.

Erfindungsgemäß wird also in jeder Tiefe eines auszumessenden Kanals 18 oder auf jeder Höhe eines auszumessenden zylindrischen Messobjekts 62 nicht nur eine einzige Messung durchgeführt, für die nicht klar ist, in welcher radialen Position sich die Sensoranordnung 11 befindet, sondern mehrere, insbesondere eine Vielzahl von Messungen, wobei sich die Sensoranordnung 11 jeweils an einer anderen radialen Position befindet. Insbesondere wird die Sensoranordnung 11 zwischen den beiden Extremlagen, also zwischen den Wänden 34, 36 des Kanals 18 hin- und herbewegt, sodass der gesamte mögliche Positionsbereich überstrichen und an vielen unterschiedlichen Positionen der Abstand gemessen wird. Durch eine anschließende Mittelung der gemessenen Einzelwerte wie oben beschrieben werden Abweichungen aufgrund von vorliegenden Asymmetrien kompensiert. Dadurch ergibt sich eine erhöhte Wiederholgenauigkeit der entsprechenden Messvorrichtung sowie ein erweiterter Messbereich von vorhandenen Messmitteln. Ferner kann die Lebensdauer der verwendeten Messmittel erhöht werden. Da die durch die mechanischen Komponenten verursachten Ergebnisverfälschungen in der Regel wesentlich höher sind als die Fehler der Sensorik und der Elektronik zusammen, kann durch das erfindungsgemäße Prinzip ein relativ hoher Verbesserungsfaktor erzielt werden, typischerweise mindestens 2 bis 10.

### Bezugszeichenliste

10  Messdorn
11  Sensoranordnung
12  Luftzufuhrkanal
13  Sensor
14  Messdüse
16  Messdüse
18  Kanal
20  Messobjekt
22  Luftversorgung
24  Druckmessvornchtung
26  Messvordüse
28  Druckmessvorrichtung
30  Längsachse
32  Messlinie
34  Wand
36  Wand
38  Aktuator

| 40 | Elektromagnet |
|---|---|
| 42 | XY-Aktuator |
| 44 | elektrostriktive Leiste |
| 45 | Außenseite |
| 46 | magentostriktives Element |
| 47 | Steuerspannung |
| 48 | XYZ-Aktuator |
| 50 | Kraftübertragungsmittel |
| 60 | Messring |
| 62 | zylindrisches Messobjekt |
| 65 | Induktivtaster |
| 67 | Ferritkern |
| 70 | Messdorn |

| $D$ | Durchmesser des Kanals |
|---|---|
| $d$ | Durchmesser des Messdorns |
| $S1, S2$ | Abstand |
| $S1', S2'$ | Abstand |
| $S1_k, S2_k$ | Abstand |

**Patentansprüche**

1. Messvorrichtung mit
   wenigstens einer Sensoranordnung (11), die zwei Sensoren (13) umfasst, welche jeweils in der Lage sind, einen Abstand zu einer Wand (34, 36) eines Messobjekts (20, 62) in einer Messrichtung zu erfassen, wobei die jeweiligen Messrichtungen der beiden Sensoren (13) auf einer gemeinsamen Messlinie (32) liegen, und
   einer Auswerteeinheit, die dazu ausgebildet ist, eine auf das Messobjekt (20, 62) bezogene Länge zu ermitteln, die mit der Summe der jeweiligen Abstände in Beziehung steht,
   **dadurch gekennzeichnet, dass**
   die Sensoranordnung (11) mittels eines Aktuators (38) relativ zu dem Messobjekt (20, 62) längs der Messlinie (32) beweglich ist und eine Steuereinheit vorgesehen ist, die dazu ausgebildet ist,
   die Sensoranordnung (11) relativ zu dem Messobjekt (20, 62) aufeinanderfolgend an mehrere Positionen zu bewegen, an jeder der Positionen die zugehörigen Abstände zu messen und daraus einen Längen-Mittelwert zu bestimmen.

2. Vorrichtung nach Anspruch 1,
   **dadurch gekennzeichnet, dass**
   der Längen-Mittelwert das arithmetische Mittel der sich aus den gemessenen Abständen ergebenden Längen ist, wobei das arithmetische Mittel bevorzugt gewichtet ist.

3. Vorrichtung nach Anspruch 1,
   **dadurch gekennzeichnet, dass**
   der Längen-Mittelwert der Median der sich aus den gemessenen Abständen ergebenden Längen ist oder dass der Längen-Mittelwert das arithmetische Mittel zwischen der höchsten bestimmten Länge und der niedrigsten bestimmten Länge ist.

4. Vorrichtung nach zumindest einem der vorstehenden Ansprüche,
   **dadurch gekennzeichnet, dass**
   die Auswerteeinheit dazu ausgebildet ist, die auf das Messobjekt (20, 62) bezogene Länge mittels einer Kalibrierfunktion aus jeweiligen Eingangsgrößen zu ermitteln.

5. Vorrichtung nach zumindest einem der vorstehenden Ansprüche,
   **dadurch gekennzeichnet, dass**
   die Auswerteeinheit dazu ausgebildet ist, mittels einer allgemeinen Linearisierungsfunktion aus dem Längen-Mittelwert eine linearisierte Endgröße zu bilden, wobei, bevorzugt, die allgemeine Linearisierungsfunktion ein Polynom von vorgegebener Ordnung ist oder eine abschnittsweise lineare Interpolationsfunktion ist.

**6.** Vorrichtung nach zumindest einem der vorstehenden Ansprüche,
**dadurchgekennzeichnet,dass**
die Sensoranordnung (11) relativ zu dem Messobjekt (20, 62) zwischen zwei Extremlagen beweglich ist, welche einer Berührung zwischen einem der Sensoren (13) und einer jeweiligen Wand (34, 36) des Messobjekts (20, 62) entsprechen.

**7.** Vorrichtung nach zumindest einem der vorstehenden Ansprüche,
**dadurch gekennzeichnet, dass**
eine Detektionseinrichtung zum Erfassen einer Berührung zwischen einem der Sensoren (13) und einer jeweiligen Wand (34, 36) des Messobjekts (20, 62) vorgesehen ist, wobei, bevorzugt, die Steuereinheit dazu ausgebildet ist, bei einem Erfassen einer Berührung zwischen einem der Sensoren (13) und einer jeweiligen Wand (34, 36) des Messobjekts (20, 62) durch die Detektionseinrichtung die Bewegung der Sensoranordnung (11) relativ zu dem Messobjekt (20, 62) in Richtung der Wand (34, 36) zu stoppen.

**8.** Vorrichtung nach zumindest einem der vorstehenden Ansprüche,
**dadurch gekennzeichnet, dass**
die Steuereinheit dazu ausgebildet ist, die Sensoranordnung (11) relativ zu dem Messobjekt (20, 62) automatisch an eine Vielzahl von vorbestimmten Positionen zu bewegen.

**9.** Vorrichtung nach zumindest einem der vorstehenden Ansprüche,
**dadurch gekennzeichnet, dass**
die Sensoranordnung (11) in einer quer zu der Messlinie (32) ausgerichteten Z-Richtung relativ zu dem Messobjekt (20, 62) beweglich ist, wobei, bevorzugt, die Steuereinheit dazu ausgebildet ist, das Messobjekt (20, 62) längs der Z-Richtung abzutasten, wobei, weiter bevorzugt, die Steuereinheit dazu ausgebildet ist, zum Abtasten des Messobjekts (20, 62) die Sensoranordnung (11) unter einer kontinuierlichen Oszillationsbewegung längs der Messlinie (32) relativ zu dem Messobjekt (20, 62) längs der Z-Richtung zu bewegen.

**10.** Vorrichtung nach zumindest einem der vorstehenden Ansprüche,
**dadurch gekennzeichnet, dass**
wenigstens zwei unterschiedliche Messlinien (32) vorgesehen sind, wobei für jede Messlinie eine eigene Sensoranordnung vorgesehen sein kann und/oder die Messrichtungen der Sensoren (13) aufeinander zu weisen.

**11.** Vorrichtung nach zumindest einem der vorstehenden Ansprüche, **dadurch gekennzeichnet, dass**
der Aktuator (38) umfasst:

wenigstens einen Elektromagneten (40), oder wenigstens ein Element (44, 46) aus einem feldaktiven Material, insbesondere aus einem elektrostriktiven oder magnetostriktiven Material, oder
wenigstens einen mechanisch, pneumatisch oder elektrisch betriebenen Vibrator, oder
wenigstens ein Piezoelement.

**12.** Vorrichtung nach zumindest einem der vorstehenden Ansprüche, **dadurch gekennzeichnet, dass**
der Aktuator (38) ein XYZ-Aktuator (48) zum Bewegen der Sensoranordnung (11) relativ zu dem Messobjekt (20, 62) in drei Raumrichtungen ist und/oder der Aktuator (38) mit dem Messobjekt (20, 62) in Eingriff steht, um dieses relativ zu der Sensoranordnung (11) zu bewegen.

**13.** Vorrichtung nach zumindest einem der vorstehenden Ansprüche, **dadurch gekennzeichnet, dass**
die Sensoren (13) pneumatische Längenmesseinrichtungen sind, welche insbesondere eine gemeinsame Luftversorgung (22) aufweisen, wobei, bevorzugt, die Messvorrichtung zwei über Kreuz angeordnete Paare von Messdüsen (14, 16) aufweist oder die Messvorrichtung eine Ringdüse umfasst.

**14.** Vorrichtung nach zumindest einem der Ansprüche 1 bis 21, **dadurch gekennzeichnet, dass**
die Sensoren (13) taktile Abstandssensoren (65), insbesondere Induktivtaster, sind.

**15.** Vorrichtung nach zumindest einem der vorstehenden Ansprüche, **dadurch gekennzeichnet, dass**
die Sensoranordnung (11) an einem Endbereich eines insbesondere flexiblen Messdorns (10, 70) angebracht ist und/oder der Aktuator (38) elektrostriktive Elemente (44) umfasst, welche den Messdorn (10, 70) in Umfangsrichtung vollständig umgeben und/oder die Sensoranordnung (11) schwimmend in der Messvorrichtung gehalten ist.

FIG. 1

FIG. 2

FIG. 3

FIG. 4

FIG. 5

FIG. 6

FIG. 7

FIG. 8

FIG. 9

FIG. 10

**EP 2 075 528 A2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6435006 B1